# EUROPÄISCHE PATENTSCHRIFT

(11) **EP 0 482 368 B1**
(45) Veröffentlichungstag und Bekanntmachung des Hinweises auf die Patenterteilung: **06.03.1996**
(21) Anmeldenummer: 91116257.6
(22) Anmeldetag: 24.09.1991
(51) Int. Cl.: A22C 11/00, A22C 15/00

(54) **Vorrichtung zum Zuführen von Wurstschleifen zu einem Rauchstock**
Device for feeding a chain of sausages to a smoking bar
Dispositif pour amener une chaîne de saucisses à une barre à fumer

(30) Priorität: 22.10.1990 DE 9014610 U
(43) Veröffentlichungstag der Anmeldung: 29.04.1992
(73) Patentinhaber: Albert Handtmann Maschinenfabrik GmbH & Co. KG, D-88400 Biberach (DE)
(72) Erfinder: Burger, Karl, W-7951 Ingoldingen-Muttenweiler (DE); Hummel, Karl, W-7950 Biberach/Riss (DE)
(74) Vertreter: Grünecker, Kinkeldey, Stockmair & Schwanhäusser Anwaltssozietät

(56) Entgegenhaltungen:
- EP-A- 0 189 763
- EP-A- 0 223 993
- EP-A- 0 395 177
- WO-A-88/07819
- CH-A- 598 766
- DE-A- 3 635 412
- DE-C- 3 300 012
- DE-U- 8 912 219
- FR-A- 2 343 427
- GB-A- 1 048 141
- US-A- 3 533 495
- US-A- 4 112 546
- US-A- 4 614 005

## Beschreibung

Die Erfindung betrifft eine Vorrichtung nach dem Oberbegriff des Anspruchs 1, z.B. wie in DE-U-89 12 219 beschrieben.

Bei einer bekannten Vorrichtung dieser Art (deutsche Offenlegungsschrift 36 35 412) ist das Transportband in einer vertikalen Ebene umlaufend angeordnet, wobei die Transporthaken etwa horizontal nach hinten ragen. Das Aufhängen der Wurstschleifen an einem derart ausgebildeten Transportband ist schwierig, es besteht die Gefahr, daß die Wurstschleifen vom Transporthaken abgleiten. Die Übergabe der Wurstschleifen von dem Transporthaken auf den Rauchstock erfolgt bereits am vorderen Ende desselben, so daß ein weiteres umlaufendes Band erforderlich ist, welches mit umlaufenden Stäben die auf dem Rauchstock jeweils aufgehängte Schleife auf diesem vorwärts bewegt, bis der Rauchstock mit Schleifen gefüllt ist. Die Transporthaken sind am Transportband in festen Abständen angebracht, so daß auch aus diesem Grund die Vorrichtung nicht universell einsetzbar ist.

Bei einer anderen bekannten Vorrichtung zum Zuführen von Wurstschleifen zu einem Rauchstock (europäische Patentanmeldung 0223 993) ist das Transportband in einer Ebene umlaufend angeordnet, die einen spitzen Winkel zur horizontalen Ebene einschließt. Die Transporthaken sind in Form von Drahthaken um ihre Längsachse schwenkbar angebracht. Sie werden an der vorderen Umlenkstelle des Transportbandes jeweils mittels eines Verstellarmes so verschwenkt, daß der Transporthaken etwa horizontal nach vorne weist. Jeder Haken vollführt beim Durchlaufen der Umlaufstelle infolge der schrägen Anordnung des Transportbandes eine Bewegung nach oben, wobei jeder Haken eine Aufwärtsbewegung erfährt und dabei mit einer Wurstschleife beladen wird. Die Bewegungsbahn der beladenen Transporthaken befindet sich oberhalb des Rauchstockes. Wenn die zum Beladen des Rauchstockes erforderliche Zahl von Wurstschleifen auf dem Transporthaken hängen, wird der Rauchstock von Hand nach oben geführt. Dabei werden die Transporthaken um ihre Längsachse so geschwenkt, daß der Haken selbst nach unten weist und jeweils die Wurstschleifen freigibt, so daß auf diese Art und Weise eine Übergabe der Wurstschleifen auf den Rauchstock erfolgt. Das mechanische Schwenken der Transporthaken um ihre Längsachse ist verhältnismäßig aufwendig und führt zu Störungsmöglichkeiten. Die Transporthaken in Form von Drahthaken können die Würste einer Wurstkette nicht im Abstand zueinander halten, so daß die Wurstschleifen sich häufig nicht über den Rauchstock schieben lassen. Auch bei dieser Vorrichtung sind die Transporthaken in unveränderlichen Abständen am Transportband angebracht.

Aus der gemäß Art. 54(3) zum Stand der Technik zählenden europäischen Offenlegungsschrift 395 177 ist eine Vorrichtung zum Zuführen einer Kette von zusammenhängenden Würsten und zum Aufhängen der Würste in Form von Schleifen sowie zum Zuführen der Wurstschleifen zu einem Rauchstock bekannt. Es ist eine Zuführeinrichtung für die Wurstkette in gestreckter Stellung vorhanden sowie ein sich daran anschließendes Transportband mit Transporthaken. Das Austrittsende der Zuführeinrichtung liegt oberhalb der von den Transporthaken beschriebenen Bahn. Das die Wurstschleifen tragende Trum des Transportbandes läuft seitlich versetzt gegenüber der Zuführeinrichtung. Das Transportband läuft in einer etwa horizontalen Ebene um und die Transporthaken sind an einem Tragarm angebracht und zweigen von diesem Tragarm in einem Winkel nach oben gerichtet ab.

Aus dem deutschen Gebrauchsmuster DE-U-89 12 219 ist ein Transportband bekannt, das in einer etwa horizontalen Ebene umläuft. Die Transporthaken sind jeweils an einem etwa senkrecht zur Ebene des Transportbandes nach unten gerichteten Tragarm angebracht, wobei der Transporthaken seitlich vom Tragarm abzweigt.

Aus der französischen Offenlegungsschrift 23 43 427 ist eine Zuführungsvorrichtung bekannt, mit der Würste in gestreckter Stellung gefördert und dann anschließend an eine Transporteinrichtung übergeben werden. Die Transporteinrichtung besteht aus einem endlos umlaufenden Transportband mit Transporthaken für die Wurstschleifen. Das Transportband läuft in einer vertikalen Ebene um.

Der Erfindung liegt das technische Problem zugrunde, eine solche Vorrichtung so auszubilden, daß sie bei einfacher Bauweise ein zuverlässiges Aufhängen der Wurstschleifen und Transportieren derselben über den Rauchstock gewährleistet.

Zur Lösung dieses Problemes sieht die Erfindung bei einer gattungsgemäßen Vorrichtung die Merkmale des Kennzeichens des Anspruchs 1 vor.

Damit die Wurstschleifen beim Erfassen durch einen Transporthaken seitlich nicht ausweichen können, ist im Bereich der vorderen Umlenkstelle des Transportbandes eine Begrenzungsstange vorgesehen, die sowohl an der Umlenkstelle als auch im Bereich des geraden Trums radial innerhalb der Umlaufbahn der Transporthaken verläuft.

Durch diese Maßnahmen wird erreicht, daß ein sicheres Aufhängen der Wurstschleifen auf den Transporthaken allein durch deren Formgebung und den erzwungenen Weg der Wurstschleifen während der Übergabe gewährleistet ist, wobei die besondere Form der Transporthaken es ermöglicht, jegliche Formen und Arten von Würsten sicher zu erfassen und zu transportieren.

In diesem Zusammenhang hat es sich als vorteilhaft erwiesen, wenn jeder Transporthaken - von oben und in Transportrichtung gesehen - schräg nach vorn außen weist.

Damit die Wurstschleifen ohne Störungen über den Rauchstock transportiert werden können, kann jeder Transporthaken zumindest an seinem dem Tragarm benachbarten Ende als ein das Aufspreizen der Wurstschleife bewirkendes Mehrkantprofil ausgebildet sein.

Um ein Abgleiten auch von sehr prallen Würsten vom Transporthaken während der Übergabe zu verhindern, kann jeder Transporthaken nach oben in einer verhältnismäßig scharfen Kante enden.

Insbesondere wenn die Wurstschleifen aus geraden Würsten bestehen, ist es für die störungsfreie Schleifenbildung günstig, wenn jeder Tragarm als eine von dem Transportband nach außen gerichtete Abweisplatte ausgebildet ist.

Eine besonders einfache Lagerung des Rauchstockes und eine eben solche Übergabe der Wurstschleifen auf den Rauchstock kann erzielt werden, wenn zumindest an mehreren Tragarmen unterhalb des Transporthakens ein den Rauchstock abstützender Stützhaken angeordnet ist. In diesem Fall genügt es für die Fixierung des Rauchstockes, wenn - in Transportrichtung gesehen - im Bereich der hinteren Umlenkstelle des Transportbandes ein Anschlag für den sich auf Stützhaken abstützenden Rauchstock angebracht ist.

Um auch besonders steife Würste zuverlässig in Schleifen legen zu können, kann vor dem Ende der Zuführeinrichtung ein die austretende Wurst nach unten ablenkendes Element angeordnet sein.

Dadurch, daß die Transporthaken ein starres Gebilde sind, also keine mechanisch bewegten Teile haben, ist es auf einfache Art und Weise möglich, daß die Tragarme am Transportband lösbar und in unterschiedlichen Abständen wieder ankuppelbar ausgebildet sind. Auf diese Art und Weise ergibt sich eine Veränderung des Abstandes der Wurstschleifen zueinander.

Dabei ist es vorteilhaft, wenn der Antriebsmotor für das Transportband drehzahlregelbar ausgebildet ist.

Zur Anpassung der Vorrichtung an Würste unterschiedlicher Länge kann das Transportband in unterschiedlichen Abständen zum Austritt der Würste aus der Zuführeinrichtung verstellbar und feststellbar sein.

Weitere Merkmale und Vorteile der Erfindung ergeben sich aus der nachfolgenden Beschreibung eines Ausführungsbeispieles und den dazugehörenden Zeichnungen.

Dabei zeigen:
- Fig. 1: eine Seitenansicht der Vorrichtung im Zusammenwirken mit einer bekannten Füll- und Portioniermaschine,
- Fig. 2: eine Draufsicht auf die Vorrichtung,
- Fig. 3: eine Vorderansicht eines ablaufenden Transporthakens,
- Fig. 4: dazu eine Draufsicht und
- Fig. 5: eine Einzelheit des Transportbandes mit daran angebrachten Transporthaken im Schnitt.

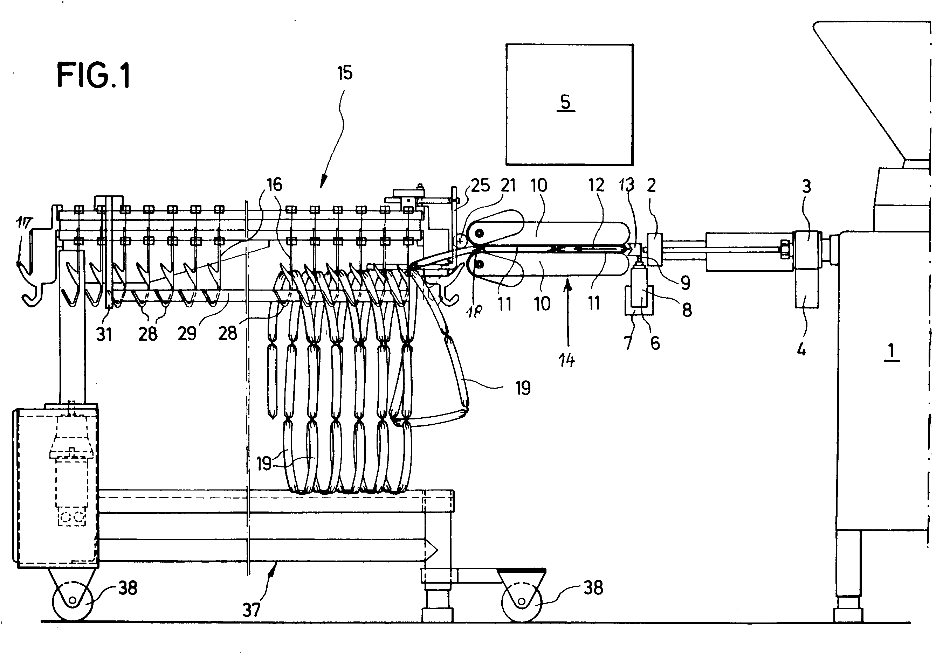

In Fig. 1 ist die mit 1 bezeichnete Füllmaschine dargestellt, aus welcher kontinuierlich das Füllgut in Strangform austritt und in der üblichen Weise in die Hülle eingefüllt wird. Der so geschaffene Wurststrang wird durch die zentrische Öffnung eines Bremsringes 2 gefördert, der durch ein Abdrehbetriebe 3 in Drehung versetzt werden kann und dabei den Wurststrang mitdreht.

Das Abdrehgetriebe 3 wird von einem Elektromotor 4 angetrieben, der von einer elektronischen Steuerung 5 drehzahlgeregelt wird.

Unmittelbar nach dem Bremsring 2 gelangt der Wurststrang zu einer Abteileinrichtung, die aus einer insgesamt mit 6 bezeichneten Verdrängereinheit besteht. Diese Verdrängereinheit 6 wird dargestellt durch einen Elektromotor 7, der mit einem Getriebe 8 zusammengebaut ist, welches zwei Antriebswellen 9 aufweist.

Der Elektromotor 7 wird ebenfalls von der elektronischen Steuerung 5 drehzahlgeregelt.

Auf jeder Antriebswelle 9 ist ein Verdrängerelement 13 aufgesteckt und damit starr verbunden. Der Abteileinrichtung ist eine insgesamt mit 14 bezeichnete Zuführeinrichtung nachgeschaltet, die aus zwei Zuführförderbändern 10 besteht. Diese Bänder 10 sind in bekannter Weise um Umlenkräder geführt, von denen welche als Antriebsräder mit einem drehzahlregelbaren Elektromotor (nicht gezeichnet) verbunden sind, der wiederum von der elektronischen Steuerung 5 geregelt wird.

Die Zuführförderbänder 10 laufen im Gegensinn um und transportieren die abgeteilten Würste 11 in Pfeilrichtung 12.

Die beiden Antriebswellen 9 für die Verdrängereinheit 6 ragen aus dem Getriebe 8 im Abstand und parallel zueinander heraus und werden synchron und gegenläufig angetrieben.

Der Zuführeinrichtung 14 ist ein insgesamt mit 15 bezeichnetes Transportband nachgeschaltet, das in einer horizontalen Ebene umläuft.

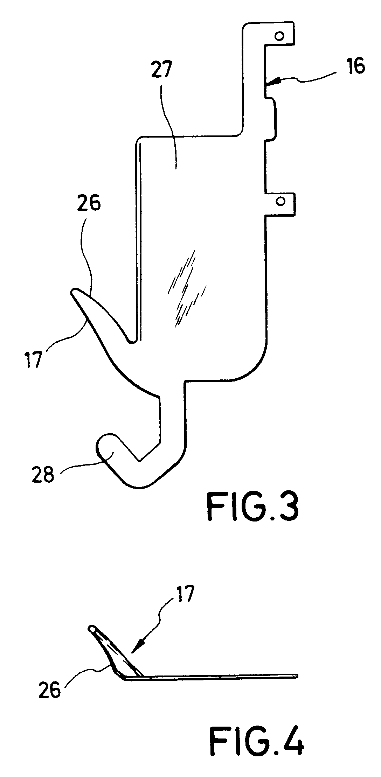

Am Transportband sind etwa senkrecht zur Ebene des Transportbandes 15 nach unten gerichtete Tragarme 16 angebracht, von denen jeweils ein Transporthaken 17 seitlich nach außen abzweigt. Der Transporthaken 17 ist dabei in einem spitzen Winkel schräg nach oben gerichtet (Figur 1 und 3). Der Winkel beträgt im gezeichneten Ausführungsbeispiel etwa 40°.

Wie sich aus der Figur 1 ergibt, befindet sich das Austrittsende 18 der Zuführeinrichtung 14 oberhalb der von den Transporthaken 17 beschriebenen Bahn.

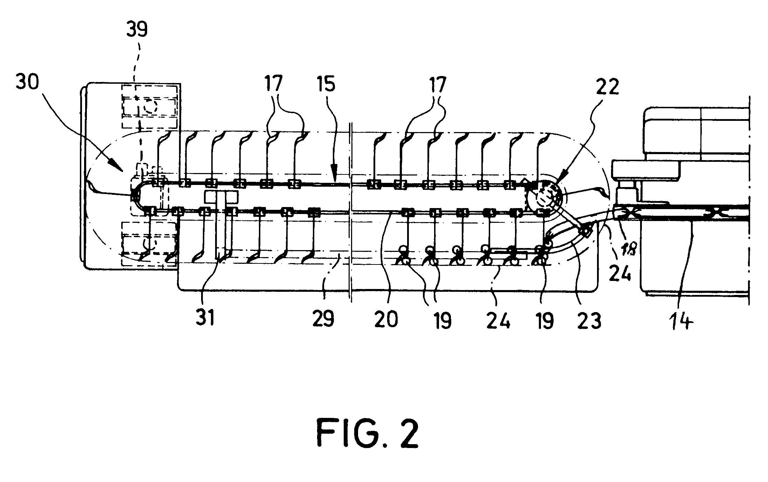

Aus der Figur 2 ist ersichtlich, daß das die Wurstschleifen 19 tragende Trum 20 des Transportbandes 15 mit der von den Transporthaken beschriebenen Bahn gegenüber der Zuführeinrichtung 14 seitlich versetzt verläuft.

In Figur 1 ist gezeigt, daß vor dem Ende der Zuführeinrichtung 14 ein die austretende Wurst nach unten ablenkendes Element in Form einer Ablenkrolle 21 angeordnet ist.

Wie insbesondere aus Figur 2 ersichtlich ist, ist im Bereich der vorderen Umlenkstelle 22 des Transportbandes 15 eine Begrenzungsstange 23 angebracht, die sowohl im Bereich der Umlenkstelle 22 als auch im Bereich des geraden Trums 20 radial innerhalb der Umlaufbahn 24 der Transporthaken 17 verläuft. Die Begrenzungsstange 23 ist mittels einer Halterung 25 in ihrer Lage einstellbar ausgebildet.

Wie aus den Figuren 1, 2 und 4 ersichtlich ist, weist jeder Transporthaken 17 - von oben und in Transportrichtung gesehen, schräg nach vorne außen.

Jeder Transporthaken 17 endet dabei nach oben in einer verhältnismäßig scharfen Kante 26 (Figur 4). Dabei ist auch dargestellt, daß jeder dieser Transporthaken 17 - von oben gesehen - nach außen leicht gekrümmt verläuft.

In Figur 3 ist außerdem gezeigt, daß jeder Tragarm 16 als Abweisplatte 27 ausgebildet ist, wobei unterhalb dem Transporthaken 17 ein Stützhaken 28 angeordnet ist, so daß sich der Rauchstock 29 auf solchen Stützhaken 28 abstützen kann. Im Bereich der hinteren Umlenkstelle 30 des Transportbandes 15 ist ein Anschlag 31 für den sich auf die Stützhaken 28 abstützenden Rauchstock 29 angebracht.

Wie aus der Figur 2 ersichtlich, weist jeder Transporthaken 17 zumindest an seinem dem Tragarm 16 bzw. der Abweisplatte 27 benachbarten Ende eine beträchtliche Dicke auf beispielweise dadurch, daß der Transporthaken 17 als Dreikantprofil ausgebildet ist.

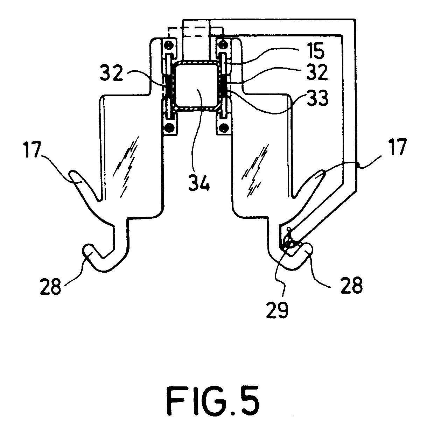

In Figur 5 ist eine Ausführungsform des insgesamt mit 15 bezeichneten Transportbandes gezeigt.

Das Transportband 15 läuft um ein zentrales Tragrohr 34 um.

Das Transportband 15 weist in seinem mittleren Bereich eine triebstockartige Verzahnung 32 auf, in welcher ein zahnartiger Vorsprung 33 als Mitnehmer eingreift.

Auf diese Art und Weise können die Transporthaken 17 am Transportband 15 lösbar und in unterschiedlichen Abständen wieder ankuppelbar angeordnet sein.

Wie aus Figur 1 noch ersichtlich, ist das Transportband 15 an einem insgesamt mit 37 bezeichneten Lagerbock gelagert, der in seinem Abstand zum Ende der Zuführeinrichtung 14 mittels Rollen 38 verstellbar ist.

Die Arbeitsweise der Vorrichtung ist wie folgt:
Die zusammenhängenden Würste 11 werden von der Zuführeinrichtung 14 in einer gestreckten Lage befördert. Am Ende der Zuführeinrichtung 14 trifft die dort austretende Wurst auf die Ablenkrolle 21, welche die Wurst nach unten ablenkt.

Infolge der seitlichen Versetzung des die Wurstschleifen 19 tragenden Trums 20 des Transportbandes 15 mit der von den Transporthaken beschriebenen Bahn gegenüber der Zuführeinrichtung 14 trifft die aus dem Austrittsende der Zuführeinrichtung 14 austretende Wurst auf die Abweisplatte 27 und wird dabei nach außen abgelenkt. Dies bewirkt, daß die offene Seite der Schleife in Transportrichtung gedreht wird. Diese Bewegung wird durch den Zug der bereits aufgehängten Wurstschleife unterstützt.

Die aus dem Austrittsende der Zuführeinrichtung 14 ausgetretene Wurst nimmt somit eine schräg nach unten und außen gerichtete Lage ein, so daß sie von dem sich in der Umlenkstelle 22 befindlichen Transporthaken 17 im gezeichneten Ausführungsbeispiel an der Abteilstelle erfaßt und mitgenommen wird. Durch das Auftreffen der Wurst auf der Abweisplatte 27 wird außerdem ein Aufdrehen der Würste an der Abteilstelle verhindert.

Wenn der Transporthaken 17 die Wurst erfaßt, gleitet sie auf dem schrägen Haken nach unten und wird dort in dem spitzen Winkel eingeklemmt, wobei die relativ scharfe Kante 26 am Transporthaken 17 sich auch in prall gefüllte Würste soweit eindrückt, daß die Wurst am Transporthaken 17 sicher gehalten und von ihm mitgenommen wird.

Wenn die Wurstschleifen an einer Abteilstelle am Haken 17 aufgehängt werden, werden die beiden benachbarten Würste durch das Dreikantprofil des Hakens 17 aufgespreizt, so daß die Wurstschleifen ohne Hemmung über den Rauchstock 29 bewegt werden können.

Der Rauchstock 29 ist mit einem Ende am Anschlag 31 gelagert. Er stützt sich, an sich frei auskragend, mit seinem anderen Bereich auf Stützhaken 28 der Transporthaken 17. Es müssen nicht alle Transporthaken 17 mit solchen Stützhaken 28 ausgerüstet sein.

Im gezeichneten Ausführungsbeispiel ist das Transportband 15 mit einem Elektromotor 39 als Antrieb ausgerüstet.

Alle elektromotorischen Antriebe der einzelnen Einrichtungen werden von der elektronischen Steuerung 5 gesteuert, so daß eine Anpassung der Arbeitsweise des Transportbandes an alle Bedingungen möglich ist, die durch die Füll- und Portioniermaschine und die Zuführeinrichtung 14 vorgegeben werden.

Es hat sich im übrigen als vorteilhaft erwiesen, das Transportband 15 in der Weise schrittweise anzutreiben, daß es jedes Mal ganz kurz stillgesetzt wird, wenn der an der Umlenkstelle 22 angekommene Transporthaken die 180° der Umlenkung passiert hat.

Das Starten des entsprechenden Transporthakens im Bereich der Umlenkstelle 22 kann mit Hilfe eines Sensors erfolgen.

Die Zuführeinrichtung 14 kann auch durch andere Mittel dargestellt werden als durch die Zuführbänder 10. Ein solches Mittel kann z.B. auch aus dem Bremsring 2 bestehen.

## Patentansprüche

1. Vorrichtung zum Zuführen einer Kette von zusammenhängenden Würsten und zum Aufhängen der Würste in Form von Schleifen sowie zum Zuführen der Wurstschleifen zu einem Rauchstock, bestehend aus einer Zuführeinrichtung für die Wurstkette in gestreckter Stellung, ferner aus einer sich daran anschließenden Transporteinrichtung in Form eines endlosen umlaufenden Transportbandes mit Transporthaken für die Wurstschleifen, wobei das Transportband (15) in einer etwa horizontalen Ebene umläuft und die Transporthaken (17) jeweils an einem etwa senkrecht zur Ebene des Transportbandes nach unten gerichteten Tragarm (16) angebracht sind, wobei der Transporthaken (17) seitlich vom Tragarm (16) abzweigt und in einem spitzen Winkel schräg nach oben gerichtet ist, **dadurch gekennzeichnet,** daß sich das Austrittsende (18) der Zuführeinrichtung (14) oberhalb der von den Transporthaken (17) beschriebenen Bahn befindet, daß weiterhin das die Wurstschleifen (19) tragende Trum (20) des Transportbandes (15) mit der von den Transporthaken beschriebenen Bahn gegenüber der Zuführeinrichtung (14) seitlich versetzt verläuft, und daß im Bereich der vorderen Umlenkstelle (22) des Transportbandes eine Begrenzungsstange (23) vorgesehen ist, die sowohl an der Umlenkstelle als auch im geraden Trum des Transportbandes radial innerhalb der Umlaufbahn der Transporthaken (17) verläuft, damit die Wurstschleifen beim Erfassen durch einen Transporthaken seitlich nicht ausweichen können.

2. Vorrichtung nach Anspruch 1, **dadurch gekennzeichnet**, daß jeder Transporthaken (17) - von oben und in Transportrichtung gesehen - schräg nach vorn außen weist.

3. Vorrichtung nach Anspruch 1 oder 2, **dadurch gekennzeichnet,** daß jeder Transporthaken (17) zumindest an seinem dem Tragarm (16) benachbarten Ende als ein das Aufspreizen der Wurstschleife (19) bewirkendes Mehrkantprofil ausgebildet ist.

4. Vorrichtung nach mindestens einem der Ansprüche 1 bis 3, **dadurch gekennzeichnet**, daß jeder Transporthaken (17) nach oben in einer verhältnismäßig scharfen Kante (26) endet.

5. Vorrichtung nach mindestens einem der Ansprüche 1 bis 4, **dadurch gekennzeichnet**, daß jeder Transporthaken (17) - von oben gesehen - nach außen gekrümmt verläuft.

6. Vorrichtung nach mindestens einem der Ansprüche 1 bis 5, **dadurch gekennzeichnet**, daß jeder Tragarm (16) als von dem Transportband (15) nach außen gerichtete Abweisplatte (27) ausgebildet ist.

7. Vorrichtung nach mindestens einem der Ansprüche 1 bis 6, **dadurch gekennzeichnet**, daß zumindest an mehreren Tragarmen (16) unterhalb des Transporthakens (17) ein den Rauchstock (29) abstützender Stützhaken (28) angeordnet ist.

8. Vorrichtung nach Anspruch 7, **dadurch gekennzeichnet**, daß - in Transportrichtung gesehen - im Bereich der hinteren Umlenkstelle (30) des Transportbandes (15) ein Anschlag (31) für den sich auf Stützhaken (28) abstützenden Rauchstock (29) angebracht ist.

9. Vorrichtung nach mindestens einem der Ansprüche 1 bis 8, **dadurch gekennzeichnet**, daß vor dem Ende der Zuführeinrichtung (14) ein die austretende Wurst nach unten ablenkendes Element (21) angeordnet ist.

10. Vorrichtung nach mindestens einem der Ansprüche 1 bis 8, **dadurch gekennzeichnet**, daß die Transporthaken (17) am Transportband (15) lösbar und in unterschiedlichen Abständen wieder ankuppelbar ausgebildet sind.

11. Vorrichtung nach mindestens einem der Ansprüche 1 bis 10, **dadurch gekennzeichnet**, daß der Antriebsmotor (39) für das Transportband (15) drehzahlregelbar ausgebildet ist.

12. Vorrichtung nach mindestens einem der Ansprüche 1 bis 11, **dadurch gekennzeichnet**, daß das Transportband (15) in unterschiedlichen Abständen zum Austritt der Würste aus der Zuführeinrichtung (14) verstellbar und feststellbar ist.

## Claims

1. Device for feeding a chain of connected sausages and for suspending the sausages in the form of loops as well as for feeding the sausage loops to a smoking rod, consisting of a feed device for the sausage chain in extended position, further of a transport device connected to it in the form of an endless rotating transport belt with transport hooks for the sausage loops, wherein the transport belt (15) rotates in an approximately horizontal plane and the transport hooks (17) are each attached to a downwardly oriented support arm (16) approximately vertical to the plane of the transport belt, wherein the transport hook (17) branches laterally from the support arm (16) and is oriented in upward sloping manner at an acute angle, characterised in that the exit end (18) of the feed device (14) is located above the path described by the transport hooks (17), that furthermore the scrip (20) of the transport belt (15) carrying the sausage loops (19) extends with the path described by the transport hooks displaced laterally with respect to the feed device, and that in the region of the forward rerouting location (22) of the transport belt a limiting bar (23) is provided which extends both at the rerouting location as well as in the straight strip of the transport belt radially within the path of rotation of the transport hooks (17) so that on capture by a transport hook, the sausage loops cannot evade to the side.

2. Device according to claim 1, characterised in that each transport hook (17), viewed from above and in the transport direction, points outwardly in sloping manner towards the front.

3. Device according to claim 1 or 2, characterised in that each transport hook (17) is constructed at least at its end adjoining the support arm (16) as a many sided profile causing the sausage loop (19) to spread open.

4. Device according to at least one of the claims 1 to 3, characterised in that each transport hook (17) ends upwardly in a relatively sharp edge (26).

5. Device according to at least one of the claims 1 to 4, characterised in that each transport hook (17), viewed from above, extends outwardly in curved manner.

6. Device according to at least one of the claims 1 to 5, characterised in that each support arm (16) is constructed as a deflector plate (27) oriented from the transport belt (15) towards the outside.

7. Device according to at least one of the claims 1 to 6, characterised in that at least on several support arms (16) a support hook (28) supporting the smoking rod (29) is arranged beneath the transport hook (17).

8. Device according to claim 7, characterised in that, viewed in the transport direction, in the region of the rearward rerouting location (30) of the transport belt (15) a limit stop (31) is attached for the smoking rod (29) supported on support hooks (28).

9. Device according to at least one of the claims 1 to 8, characterised in that ahead of the end of the feed device (14) an element (21) is arranged deflecting the emerging sausage downwardly.

10. Device according to at least one of the claims 1 to 8, characterised in that the transport hooks (17) on the transport belt (15) are constructed detachably and in a manner capable of being connected again at different distances.

11. Device according to at least one of the claims 1 to 10, characterised in that the drive motor (39) for the transport belt (15) is constructed to be capable of speed regulation.

12. Device according to at least one of the claims 1 to 11, characterised in that the transport belt (15) is adjustable and securable at different distances from the exit of the sausages from the feed device (14).

## Revendications

1. Dispositif pour amener une chaîne de saucisses continues et pour accrocher les saucisses en forme de chapelets, ainsi que pour amener les chapelets de saucisses à une barre à fumer, composé d'un dispositif d'alimentation pour la chaîne de saucisses en position étirée, et d'un dispositif de transport consécutif, en forme d'une bande transporteuse sans fin, avec des crochets de transport pour les chapelets de saucisses, la bande transporteuse (15) tournant dans un plan à peu près horizontal et les crochets de transport (17) étant respectivement montés sur un bras-support (16), dirigé vers le bas à peu près à la perpendiculaire du plan de la bande transporteuse, le crochet de transport (17) bifurquant latéralement du bras-support (16) et étant dirigé obliquement vers le haut sous un angle aigu, caractérisé en ce que l'extrémité de sortie (18) du dispositif d'alimentation (14) se situe au-dessus de la trajectoire décrite par les crochets de transport (17), en ce que le brin (20) de la bande transporteuse (15), supportant les chapelets de saucisses (19), avec la trajectoire décrite par les crochets de transport, se situe en déport latéral par rapport au dispositif d'alimentation (14), et en ce qu'une barre de délimitation (23) est prévue dans la zone du point de renvoi avant (22) de la bande transporteuse, cette barre se situant dans le sens radial à l'intérieur de l'orbite des crochets de transport (17), aussi bien au point de renvoi que dans le brin rectiligne de la bande transporteuse, afin que les chapelets de saucisses ne puissent se déporter latéralement lors de leur interception par un crochet de transport.

2. Dispositif suivant la revendication 1, caractérisé en ce que chaque crochet de transport (17), vu du haut et dans le sens de transport, est dirigé obliquement vers l'avant et vers l'extérieur.

3. Dispositif suivant l'une des revendications 1 ou 2, caractérisé en ce que chaque crochet de transport (17) est réalisé, sur son extrémité limitrophe au bras-support (16) du moins, sous forme d'un profil polygonal provoquant l'écartement du chapelet de saucisses (19).

4. Dispositif suivant l'une au moins des revendications 1 à 3, caractérisé en ce que chaque crochet de transport (17) se termine vers le haut par une arête (26), relativement acérée.

5. Dispositif suivant l'une au moins des revendications 1 à 4, caractérisé en ce que chaque crochet de transport (17), vu du haut, est incurvé vers l'extérieur.

6. Dispositif suivant l'une au moins des revendications 1 à 5, caractérisé en ce que chaque bras-support (16) est réalisé sous forme de plaque de chasse (27), orientée en direction de l'extérieur de la bande transporteuse (15).

7. Dispositif suivant l'une au moins des revendications 1 à 6, caractérisé en ce qu'un crochet d'appui (28), supportant la barre à fumer (29), est disposé au-dessous du crochet de transport (17), sur plusieurs bras-supports (16) du moins.

8. Dispositif suivant la revendication 7, caractérisé en ce que, vu dans le sens de transport, une butée (31) pour la barre à fumer (29), s'appuyant sur des crochets d'appui (28), est montée dans la zone du point de renvoi arrière (30) de la bande transporteuse (15).

9. Dispositif suivant l'une au moins des revendications 1 à 8, caractérisé en ce qu'un élément (21), déviant vers le bas la saucisse en cours de sortie, est disposé avant l'extrémité du dispositif d'alimentation (14).

10. Dispositif suivant l'une au moins des revendications 1 à 8, caractérisé en ce que les crochets de transport (17) ont une réalisation amovible sur la bande transporteuse (15), et sont réaccouplables à différentes distances.

11. Dispositif suivant l'une au moins des revendications 1 à 10, caractérisé en ce que le moteur de commande (39) de la bande transporteuse (15) est doté d'un réglage de vitesse.

12. Dispositif suivant l'une au moins des revendications 1 à 11, caractérisé en ce que la bande transporteuse (15) peut être déplacée et fixée à différentes distances de la sortie des saucisses du dispositif d'alimentation (14).
